# FASCICULE DE BREVET EUROPEEN

(11) **EP 0 415 835 B1**
(45) Date de publication et mention de la délivrance du brevet: **03.01.1996**
(21) Numéro de dépôt: 90402367.8
(22) Date de dépôt: 27.08.1990
(51) Int. Cl.: B01D 53/86, B01D 39/20, B01J 23/86, B01J 35/06, F01N 3/28, F01N 3/02

(54) **Elément pour la filtration et/ou l'épuration de gaz chauds, et son procédé de fabrication**
Element zur Filtration und/oder Reinigung von heissen Gasen und seine Herstellungsmethode
Element for the filtration and/or the purification of hot gases and its method of manufacture

(30) Priorité: 30.08.1989 FR 8911390
(43) Date de publication de la demande: 06.03.1991
(73) Titulaire: OFFICE NATIONAL D'ETUDES ET DE RECHERCHES AEROSPATIALES(O.N.E.R.A.), F-92322 Châtillon Cédex (FR)
(72) Inventeur: Delaunay, Christophe, F-75004 Paris (FR); Locq, Didier, F-92260 Fontenay Aux Roses (FR); Walder, André, F-94240 L'Hay Les Roses (FR)
(74) Mandataire: Gorree, Jean-Michel

(56) Documents cités:
- EP-A- 0 178 426
- DE-A- 1 442 947
- DE-A- 1 442 947
- FR-A- 2 587 635
- GB-A- 1 603 843
- GB-A- 2 000 045
- GB-A- 2 007 994
- LU-A- 68 670

## Description

La présente invention concerne des perfectionnements apportés à la structure et au procédé de fabrication d'éléments épurateurs à catalyse pour la filtration et l'épuration catalytique de gaz chauds, par exemple (mais non exclusivement) de gaz d'échappement de moteurs à combustion interne, ces éléments comportant une structure fibreuse en alliages métalliques du type MCrAlX dans lequel M est une matrice choisie parmi le fer et/ou le nickel et/ou le cobalt, selon le document FR-A-2 587 635.

Les supports de matière active utilisés aujourd'hui dans les éléments filtrants et/ou épurateurs à catalyse pour l'épuration de gaz chauds, et en particulier dans les pots catalytiques de traitement des gaz d'échappement de véhicules automobiles, sont essentiellement constitués de céramique (cordiérite). Les supports ainsi constitués possèdent les défauts inhérents à ces matériaux, savoir une grande fragilité mécanique (sensibilité aux vibrations et aux chocs thermiques) qui constitue un handicap en particulier pour l'application automobile, une capacité calorifique élevée et une conductivité thermique médiocre (qui accroissent le temps nécessaire à l'obtention des conditions de fonctionnement optimales), un processus de fabrication délicat (qui accroît considérablement le coût).

Il a également été proposé des solutions faisant appel à des structures métalliques, notamment à des feuillards obtenus par laminage. D'une façon générale, leur coût est supérieur à celui des céramiques, dont la matière première est très bon marché.

Dans tous les cas, les structures connues comportent des canaux rectilignes dans lesquels s'écoule le gaz a épurer: l'écoulement est laminaire et n'est pas propice à assurer une venue en contact homogène de l'ensemble de la masse gazeuse avec le catalyseur tapissant les parois des canaux. Des solutions apportées à ce problème permettent, certes, de créer une relative turbulence améliorant l'efficacité du traitement des gaz, mais le rendement global du traitement est loin d'être totalement satisfaisant, et la structure du pot s'en trouve compliquée.

Par ailleurs, les pots catalytiques métalliques connus sont certes aptes à traiter la phase gazeuse des gaz d'échappement, en particulier dans le cas des moteurs à explosion, mais sont sans effet notable pour le filtrage des particules solides en suspension dans les gaz, en particulier pour retenir les particules d'imbrûlés présentes dans les gaz d'échappement des moteurs diesel.

Il est également connu de constituer des filtres pour des écoulements gazeux, en particulier des pots de filtrage pour les gaz d'échappement de moteur, qui incluent une masse fibreuse constituée à partir de fibres : GB-A-2 007 994 mentionne une laine d'acier, c'est-à-dire une masse fibreuse constituée à partir de fibres longues ; DE-A-1 442 947 fait mention de fibres relativement longues obtenues par grattage ou rabottage ; EP-A-0 178 526 fait mention de l'emploi de fibres céramiques ; enfin GB-A-2 000 045 et GB-A-1 603 843 font mention d'un tissage métallique effectué avec des fils très longs.

Toutefois, pour constituer les masses fibreuses employées dans l'art antérieur, les fils ou fibres de grande longueur sont disposés à plat les uns à coté des autres selon une même direction générale, puis cette nappe est repliée sur elle-même soit par enroulement, soit par pliage en accordéon. La prédisposition initiale des fils ou fibres conduit à l'existence, au sein de la masse fibreuse finale, de passages privilégiés qui ne confèrent pas à la masse fibreuse une structure homogène et qui amoindrissent la qualité de filtration de la masse fibreuse.

L'invention a donc pour but de remédier aux divers inconvénients des structures actuellement connues, en proposant une structure perfectionnée, ainsi que son procédé de fabrication, qui soit plus efficace dans l'épuration des gaz et qui filtre les particules solides présentes dans ces derniers, qui soit d'une fabrication plus simple et moins coûteuse et dont globalement le coût soit moins élevé que celui des structures actuelles.

A ces fins, selon un premier aspect de l'invention, il est proposé un élément épurateur à catalyse du type mentionné au préambule, qui se caractérise en ce ladite structure fibreuse est constituée de fibrilles qui sont enchevêtrées de façon aléatoire et compactées pour présenter un degré de porosité prédéterminé et qui sont constituées du susdit alliage métallique du type MCrAlX dans lequel X est un élément renforçant l'adhésion de la couche d'oxyde qui se forme sur les fibrilles au contact des gaz chauds, choisi parmi le zirconium, le hafnium, le cérium, le lanthane et le métal mixte (misch-metall), et en ce que les fibrilles sont revêtues d'une couche d'un composé catalytique.

Par "misch-metall", on entend un métal mixte de terres cériques (lanthane, cérium, praséodyme, néodyme, prométhium, samarium) contenant tous les éléments des terres rares présentes dans la monazite [orthophosphate de terres cériques contenant des terres yttriques (europium, gadolinium, terbium, dysprosium, holmium, erbium, thulium, ytterbium, lutetium) en faibles proportions, ainsi que du thorium et de la silice], soit notamment
52% Ce, 18 % Nd, 5% Pr, 1% Sm, 24% (La et autres terres rares)
ou bien, dans une formule enrichie en lanthane,
47 % Ce, 19 % Nd, 6 % Pr, 1 % Sm, 27 % (La et autres terres rares).

Une structure fibreuse du type revendiqué supporte des températures élevées, et en particulier les températures de l'ordre de 150°C à 900°C rencontrées dans les gaz d'échappement des moteurs à combustion interne ; en outre les matériaux constitutifs sont peu oxydés et/ou corrodés, aux températures considérées, par les gaz traités, en particulier les gaz d'échappement corrosifs des moteurs. On est donc ainsi assuré d'une durée de vie convenable de la masse fibreuse filtrante.

L'efficacité toute particulière de la structure fibreuse utilisée en tant que filtre tient au fait que la porosité peut être adaptée avec précision aux exigences de filtrage requises, et surtout au fait que cette structure fibreuse, qu'elle qu'en soit la réalisation, ne présente pas de trajets privilégiés pour les gaz ; la faible section de passage offerte aux gaz entre les fibrilles adjacentes et la répartition incohérente, bien qu'homogène, des fibrilles brisent les trajectoires suivies par les gaz, accroissent la turbulence, et d'une façon générale améliorent le contact entre la masse gazeuse et les fibrilles.

De façon souhaitable, la structure fibreuse est frittée, de manière à assurer une solidarisation mécanique des fibrilles entre elles qui procure une meilleure tenue mécanique et maintient l'homogénéité de la masse fibreuse dans le temps.

Avantageusement, la masse fibreuse est enfermée dans un conteneur de manière à obtenir un élément aisément manipulable et protégé contre les atteintes de la pollution environnante (boues, poussières), surtout lorsqu'il s'agit de réaliser des pots d'échappement. Le filtre se présente alors sous forme d'une cartouche facile à mettre en place.

De façon préférée alors, le conteneur est métallique et, grâce au frittage, les fibrilles sont non seulement solidarisées entre elles, mais, en outre, les fibrilles périphériques sont solidarisées à la paroi du conteneur, ce qui empêche les fibrilles de se déplacer ensuite dans le conteneur et contribue à conserver dans le temps l'homogénéité initiale de la structure fibreuse.

Grâce aux dispositions qui viennent d'être énoncées, on dispose d'un élément filtrant qui est particulièrement apte à retenir de façon efficace les particules en suspension dans les gaz, notamment les particules d'imbrûlés, d'huile, etc. en suspension dans les gaz d'échappement des moteurs, et en particulier des moteurs diesel.

De préférence, les fibrilles sont revêtues d'une couche intermédiaire d'un produit de retenue à grande surface développée (wash-coat) et le composé catalytique est déposé sur cette couche intermédiaire. La présence du wash-coat accroît de façon considérable la surface effective de contact du catalyseur et des gaz, et le rendement de l'élément épurateur se trouve donc amélioré, pour un même encombrement.

Ainsi, grâce à l'invention, on dispose d'un élément épurateur à catalyse qui est d'une constitution simple, d'une efficacité remarquable du fait que la turbulence des gaz provoquée par l'absence de trajets privilégiés et la surface de contact importante assurent que la quasi totalité de la masse gazeuse qui le traverse est mise en contact avec le catalyseur et subit un traitement épurateur. En outre, du fait que la partie active de l'élément épurateur est formée par une masse fibreuse telle que précitée, il en résulte que, dans un élément épurateur à catalyse conforme à l'invention, les fonctions de filtrage et d'épuration sont assurées de façon combinée par le même organe, d'où un gain de volume, de poids et de coût.

Enfin, selon un second aspect de l'invention, il est proposé un procédé pour fabriquer un élément épurateur à catalyse tel que ci-dessus, procédé qui se caractérise en ce qu'il comporte les étapes suivantes :
- on prépare des fibrilles d'alliages métalliques du type MCrAlX, dans lesquels M est, d'une façon en soi connue, une matrice choisie parmi le fer et/ou le nickel et/ou le cobalt et X est un élément renforçant l'adhésion de la couche d'oxyde qui se forme sur les fibrilles au contact des gaz chauds, choisi parmi le zirconium, le hafnium, le cérium, le lanthane et le métal mixte (misch-metall),
- on assemble ces fibrilles dans une répartition aléatoirement désordonnée et on les compacte de manière à constituer une structure fibreuse présentant un degré de porosité prédéterminé,
- et on revêt les fibrilles d'une couche d'un composé catalytique.

De façon particulièrement intéressante en raison de son efficacité, les fibrilles sont obtenues par mise en oeuvre d'un processus d'hypertrempe sur rouleau, en soi connu. On peut à ce sujet se référer à la demande de brevet FR. 2 587 635. Il peut être souhaitable de broyer les fibrilles avant de les compacter de manière à leur donner une longueur suffisamment faible pour qu'elles s'entremêlent convenablement et de façon homogène.

De préférence, la structure fibreuse est soumise à un traitement de frittage de manière que les fibrilles soient solidarisées les unes aux autres.

De façon avantageuse, la structure fibreuse est introduite dans un conteneur métallique et l'ensemble est soumis au traitement de frittage de sorte que la masse fibreuse soit solidarisée, par ses fibrilles périphériques, à la paroi du conteneur.

Avantageusement, les fibrilles sont revêtues d'un composé catalytique après avoir fait subir aux fibrilles un traitement de surface destiné à accroître leur pouvoir d'accrochage. De préférence également, avant le dépôt du composé catalytique, on revêt les fibrilles d'une couche intermédiaire d'un produit de retenue à grande surface développée (wash-coat).

L'invention sera mieux comprise à la lecture de la description détaillée qui suit.

L'invention exploite la résistance élevée à l'oxydation à haute température des matériaux métalliques alliés du type MCrAlX, dans lequel M est une matrice choisie parmi le fer et/ou le nickel et/ou le cobalt et X est un élément renforçant l'adhésion de la couche d'oxyde qui se forme sur les fibrilles au contact des gaz chauds et choisi parmi le zirconium, le hafnium, le cérium, le lanthane et le métal mixte ou misch-metall, comme indiqué précédemment.

On connaît des matériaux abradables métalliques MCrAlY, utilisés par exemple pour la protection des aubes de turbines (F. DUFLOS et autres, New Materials for honey comb structures with improved resistance to high temperature oxidation, High temperature alloys for gas turbine and other applications, 1986, Proceedings of the Conference, Liège, Belgium, 6-9 octobre 1986, D. Reidel Publishing Cy) pour l'obtention desquels il a été proposé un procédé de fabrication performant (demande de brevet FR. 2 587 635).

En bref, ce procédé consiste à projeter un jet d'alliage métallique liquide sur la périphérie d'une roue métallique en rotation. Le métal liquide est solidifié rapidement au contact de la roue et donne lieu à la formation soit d'un ruban, soit de fibrilles, selon la configuration de la surface de solidification. Les dimensions transversales (largeur et épaisseur) sont réglées principalement par la largeur de fente d'éjection, la distance entre roue et creuset et la vitesse de rotation de la roue. L'intérêt de ce procédé est double. Il permet d'obtenir des feuillards ou des fibrilles dans des compositions d'alliages qui ne pourraient pas être transformées en raison de leur manque de ductilité. Par exemple dans le cas des alliages MCrAlY, il a permis d'accroître la teneur en aluminium, et donc leur résistance à l'oxydation. Ceci n'aurait pas pu se faire par les voies de la métallurgie conventionnelle car ces alliages ne sont ni laminables, ni tréfilables. Il existe néanmoins des limites qui sont imposées par les diagrammes de phase, la présence d'un composé fragile pouvant réduire la ductilité du matériau ou rendre la mise en oeuvre difficile.

Il permet également de simplifier le cycle de fabrication qui ne comporte, après la fabrication du lingot d'alliage, qu'une opération de coulée sur roue tout en conduisant à un matériau dans lequel les éléments d'addition sont répartis de façon très homogène.

Les fibrilles produites par ce procédé se présentent sous forme de copeaux très fins, de section semi-circulaire dont les deux dimensions transversales (largeur et épaisseur) sont réglables en jouant sur la géométrie de la roue et sur les conditions d'éjection du métal liquide. Leur longueur qui est comprise entre quelques centimètres et un mètre environ peut éventuellement être réduite par passage dans un broyeur à lames.

D'autres techniques sont connues pour obtenir des fibres individuelles ou fibrilles grossières d'un alliage métallique de ce type (notamment par griffage à froid ou par tréfilage) qui permettent la fabrication de feutres, de laines d'acier ou de pailles de fer. Toutefois, dans tous les cas, les nuances d'alliage utilisées doivent présenter des propriétés adaptées aux procédés mis en oeuvre ; en particulier, ces alliages doivent être suffisamment ductiles. Cette condition restreint donc la nature des fibres à des matériaux modérément chargés en éléments durcissants. Dans le cas des alliages MCrAlX, la teneur en aluminium, qui conditionne la résistance à l'oxydation, doit être limitée à un niveau suffisamment faible pour éviter un durcissement excessif, rendant la transformation difficile, voire impossible. Même si, pour certains matériaux, des conditions de transformation particulièrement soignées permettent d'obtenir des fils relativement fins, le coût de production en reste très élevé.

Le procédé préconisé d'hypertrempe sur rouleau permet de contourner cette difficulté, puisqu'aucune transformation thermomécanique n'est requise pour aboutir à la fibrille.

Les fibres individuelles, ou fibrilles, éventuellement broyées (afin d'accroître plus facilement la densité apparente des feutres) pour obtenir des longueurs de l'ordre de quelques millimètres, par exemple 10 à 15 mm, peuvent être rassemblées dans une répartition aléatoirement désordonnée, mais homogène, de manière à former un feutre dont la porosité peut être réglée par simple compression (porosité pouvant dépasser 95%).

Une consolidation mécanique de la structure fibreuse poreuse ainsi obtenue est réalisée par un frittage en phase halogénée. Cette technique est rendue nécessaire par la présence d'aluminium qui, lors d'un traitement thermique, même sous vide poussé, conduit à la formation à la surface des fibres d'une mince couche d'alumine gênant leur liaison par diffusion. Par contre, l'halogène formé à partir d'un donneur décape la surface des fibres et permet le frittage. Pendant ce traitement, l'activité chimique des éléments dans la phase gazeuse est réglée par un cément adapté à la composition des fibrilles afin d'éviter toute modification de composition due à un échange entre le feutre et l'enceinte de traitement (voir notamment : P. GALMICHE, Application en constructions aérospatiales et retombées des techniques thermochimiques ONERA,L'Aéronautique et l'Astronautique, N° 41-1973-3, p. 33 à 42 ; R. PICHOIR, Etude comparative de deux méthodes de projection pour superalliages : cas de revêtements de type NiAl sur alliage IN 100, La Recherche Aérospatiale, N° 1974-5, p. 277 à 289).

La masse fibreuse peut être disposée au sein d'un cément pulvérulent constitué, d'une part, des mêmes éléments métalliques que les fibrilles, ou d'une partie de ces éléments, à des concentrations voisines et, d'autre part, d'un diluant céramique chimiquement inerte (généralement de l'alumine) destiné à éviter la prise en masse du cément lors de l'opération de frittage. Le traitement, qui dure plusieurs heures, est effectué à haute température, sous atmosphère protectrice d'hydrogène ou d'argon.

Pour éviter l'immersion dans le cément pulvérulent, opération coûteuse en temps et rendant la procédure discontinue, on peut prévoir d'effectuer un traitement en atmosphère gazeuse. La masse fibreuse est alors placée dans une enceinte où règne une atmosphère gazeuse contenant un halogénure provenant d'un cément approprié. Le traitement peut ainsi être effectué en continu, ce qui réduit les opérations de manipulations et le coût de cette étape de production.

Il est souhaitable que la masse fibreuse soit disposée dans un conteneur, tel qu'un tube, de manière à constituer un composant protégé et plus facilement manipulable. Ce conteneur est ouvert pour permettre le passage des gaz chauds. De préférence, la masse fibreuse est mise en place dans un tube métallique avant l'opération de frittage, et le traitement est mené sur l'ensemble du tube et de la masse fibreuse qu'il renferme. Il y a alors liaison mécanique par frittage entre les fibrilles périphériques et la paroi du tube. Le feutre est ainsi solidarisé au tube, et l'ensemble constitue une sorte de cartouche qui peut être introduite dans tout système de filtrage et d'épuration et qui s'apparente à une structure de pot catalytique. Il va de soi que la forme du tube (section circulaire, carrée...), sa composition dans le cas d'un tube métallique (dans la limite de la compatibilité du matériau avec le procédé) et sa structure (étanche, percé de trous, constitué d'une tôle ou d'un tamis...) sont des paramètres tout-à-fait compatibles avec la technique de frittage utilisée. Ce procédé permet de développer des géométries variées, comme par exemple une structure permettant une introduction axiale des gaz avec circulation radiale vers un collecteur.

Le filtre ainsi obtenu est apte à assurer la retenue de particules en suspension dans des gaz, par exemple pour filtrer des gaz d'échappement de moteurs à combustion interne, et en particulier de moteurs diesel.

Quant à la fonction de catalyse, elle résulte de la présence d'un composé catalytique déposé sur les fibrilles de la structure fibreuse obtenue à la suite de l'opération de frittage.

Bien que le composé catalytique puisse être déposé directement sur la surface des fibrilles, après un éventuel traitement de surface destiné à accroître leur pouvoir d'accrochage du composé, il est cependant préférable de procéder au depôt d'une couche intermédiaire (wash-coat) constituée d'alumine qui est consolidée par traitement thermique. Cette couche intermédiaire à surface poreuse accroît considérablement la surface effective de contact avec l'atmosphère environnante, surface qui peut atteindre 30 à 40 m²/g,au lieu de 1 m²/g environ pour la surface unie des fibrilles. L'apport du composé catalytique est ensuite effectué à partir d'une solution de sels des métaux constituant le composé et qui se répartissent sur la surface de la couche intermédiaire et, après traitement thermique de décomposition, forment des cristallites de quelques nanomètres.

En suite de quoi on obtient un filtre qui est apte à assurer une fonction d'épuration catalytique des gaz d'une façon particulièrement efficace en raison des turbulences introduites par la structure fibreuse dans l'écoulement gazeux et de la surface de contact considérable entre les gaz et le catalyseur.

Un filtre conforme à l'inventlon est donc particulièrement apte à être utilisé comme pot catalytique pour le traitement des gaz d'échappement des moteurs à combustion interne, quel qu'en soit le type.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

## Revendications

1. Elément épurateur à catalyse pour la filtration et l'épuration catalytique de gaz chauds, comportant une structure fibreuse en alliages métalliques du type MCrAlX dans lequel M est une matrice choisie parmi le fer et/ou le nickel et/ou le cobalt,
caractérisé en ce que ladite structure fibreuse est constituée de fibrilles qui sont enchevêtrées de façon aléatoire et compactées pour présenter un degré de porosité prédéterminé et qui sont constituées du susdit alliage métallique du type MCrAlX dans lequel X est un élément renforçant l'adhésion de la couche d'oxyde qui se forme sur les fibrilles au contact des gaz chauds, choisi parmi le zirconium, le hafnium, le cérium, le lanthane et le métal mixte (mischmetall), et en ce que les fibrilles sont revêtues d'une couche d'un composé catalytique.

2. Elément selon la revendication 1, caractérisé en ce que la structure fibreuse est frittée pour solidariser les fibrilles les unes aux autres.

3. Elément selon la revendication 1 ou 2, caractérisé en ce que la structure fibreuse est disposée dans un conteneur ouvert pour permettre le passage des gaz chauds.

4. Elément selon les revendications 2 et 3, caractérisé en ce que le conteneur est métallique et en ce que les fibrilles périphériques de la structure fibreuse sont solidarisées par frittage à la face interne du conteneur.

5. Elément selon l'une quelconque des revendications 1 à 4, caractéisé en ce que les fibrilles sont revêtues d'une couche intermédiaire d'un produit de retenue à grande surface développée (wash-coat) et en ce que le compose catalytique est déposé sur cette couche intermédiaire.

6. Utilisation d'un élément épurateur à action catalytique pour l'épuration catalytique des gaz d'échappement de moteurs à combustion interne, caractérisé en ce qu'il est constitué selon l'une quelconque des revendications 1 à 5.

7. Procédé pour fabriquer un élément épurateur à catalyse pour la filtration et l'épuration catalytique de gaz chauds, caractérisé en ce qu'il comporte les étapes suivantes :
- on prépare des fibrilles d'alliages métalliques du type MCrAlX, dans lesquels M est, d'une façon en soi connue, une matrice choisie parmi le fer et/ou le nickel et/ou le cobalt et X est un élément renforçant l'adhésion de la couche d'oxyde qui se forme sur les fibrilles au contact des gaz chauds, choisi parmi le zirconium, le hafnium, le cérium, le lanthane et le métal mixte (misch-metall),
- on assemble ces fibrilles dans une répartition aléatoirement désordonnée et on les compacte de manière à constituer une structure fibreuse présentant un degré de porosité prédéterminé,
- et on revêt les fibrilles d'une couche d'un compose catalytique.

8. Procédé selon la revendication 7, caractérisé en ce que les fibrilles sont obtenues par mise en oeuvre d'un processus d'hypertrempe sur rouleau, en soi connu.

9. Procédé selon la revendication 7 ou 8, caractéisé en ce qu'avant d'être compactées les fibrilles sont broyées.

10. Procédé selon l'une quelconque des revendications 7 à 9, caractérisé en ce que la structure fibreuse obtenue est soumise à un traitement de frittage.

11. Procédé selon l'une quelconque des revendications 7 à 9, caractérisé en ce que la structure fibreuse est introduite dans un conteneur métallique, puis l'ensemble est soumis à un traitement de frittage, de sorte que les fibrilles périphériques soient en outre solidarisées à la paroi interne du conteneur.

12. Procédé selon l'une quelconque des revendications 7 à 11, caractérisé en ce qu'avant le dépôt d'un composé catalytique on effectue un traitement de surface des fibrilles pour accroître leur pouvoir d'accrochage.

13. Procédé selon la revendication 12, caractérisé en ce qu'avant le dépôt du composé catalytique on revêt les fibrilles d'une couche intermédiaire d'un produit de retenue à grande surface développée (wash-coat).

## Claims

1. Catalytic purifying element for filtering and catalytic purifying hot gases, comprising a fibrous structure made of metal alloys of MCrAlX type, in which M is a matrix chosen from iron and/or nickel and/or cobalt,
characterized in that the fibrous structure is constituted of fibrils which are tangled randomly and compacted so as to obtain a predetermined degree of porosity, and which are constituted of said metal alloy of MCrAlX type in which X is an element reinforcing the adhesion of the oxide layer which is formed on the fibrils in contact with hot gases, chosen from zirconium, hafnium, cerium, lanthanum and misch-metal, and that the fibrils are coated with a layer of a catalytic compound.

2. Element according to claim 1, characterized in that the fibrous structure is sintered so as to bond the fibrils together.

3. Element according to claim 1 or 2, characterized in that the fibrous structure is housed in a container, which is open so as to allow the passage of the hot gases.

4. Element according to claims 2 and 3, characterized in that the container is made from metal and in that the peripheral fibrils of the fibrous structure are bonded by sintering to the internal face of the container.

5. Element according to anyone of claims 1 to 4, characterized in that the fibrils are coated with an intermediate layer of a retaining product having large developed surface (wash coat) and in that the catalytic compound is deposited in this intermediate layer.

6. Use of a purifying element with catalytic action for the catalytic purification of the exhaust gases of internal combustion engines, characterized in that it is formed according to anyone of claims 1 to 5.

7. Method of manufacturing a catalytic purifying element for filtering and catalytic purifying hot gases, characterized in that it comprises the following steps :
- preparing fibrils made of metal alloys of the MCrAlX type in which M is a per se known matrix chosen from iron and/or nickel and/or cobalt and X is an element reinforcing the adhesion of the oxide layer which is formed on the fibrils in contact with hot gases, chosen from zirconium, hafnium, cerium, lanthanum and misch-metal,
- assembling said fibrils in a randomly disordered distribution and compacting them so as to obtain a fibrous structure having a predetermined degree of porosity,
- and coating said fibrils with a layer of a catalytic compound.

8. Method according to claim 7, characterized in that the fibrils are obtained by using a roller overhardening process, known per se.

9. Method according to claim 7 or 8, characterized in that, before being compacted, the fibrils are crushed.

10. Method according to any one of claims 7 to 9, characterized in that the obtained fibrous structure is subjected to a sintering treatment.

11. Method according to any one of claims 7 to 9, characterized in that the fibrous structure is introduced into a metal container, then the assembly is subjected to a sintering treatment, so that the peripheral fibrils are further bonded to the internal wall of the container.

12. Method according to anyone of claims 7 to 11, characterized in that, before depositing a catalytic compound, a surface treatment of the fibrils is carried out so as to increase their binding power.

13. Method according to claim 12, characterized in that, before depositing the catalytic compound, the fibrils are coated with an intermediate layer of a retaining product having large developed surface (wash coat).

## Patentansprüche

1. Katalytisches Reinigungselement zur Filtration und katalytischen Reinigung heißer Gase, umfassend eine Faserstruktur aus Metallegierungen vom MCrAlX-Typ wobei M eine Matrix, ausgewählt aus Eisen und/oder Nickel und/oder Kobalt ist,
dadurch gekennzeichnet,
daß die Faserstruktur aus Fasern gebildet wird, die in regelloser Weise verhakt und verdichtet sind um einen vorbestimmten Porositätsgrad aufzuweisen und die von der Metallegierung vom MCrAlX-Typ gebildet werden, worin X ein Element ist, das die Adhäsion der Oxidschicht, welche sich bei Kontakt mit heißen Gasen auf den Fasern bildet, verstärkt, ausgewählt aus Zirkonium, Hafnium, Cer, Lanthan und Misch metall , und daß die Fasern mit einer Schicht einer Katalysatorzusammensetzung überzogen sind.

2. Element nach Anspruch 1,
dadurch gekennzeichnet,
daß die Faserstruktur gesintert ist um die Fasern untereinander zu verbinden.

3. Element nach Anspruch 1 oder 2,
dadurch gekennzeichnet,
daß die Faserstruktur in einem offenen Behälter angeordnet ist um das Durchströmen heißer Gase zu erlauben.

4. Element nach Anspruch 2 und 3,
dadurch gekennzeichnet,
daß der Behälter metallisch ist und daß die Fasern am Rand der Faserstruktur durch Sintern mit der Innenseite des Behälters verbunden werden.

5. Element nach einem der Ansprüche 1 bis 4,
dadurch gekennzeichnet,
daß die Fasern mit einer intermediären Schicht eines Haltestoffs mit groß entwickelter Oberfläche (wash-coat) überzogen sind und daß die Katalysatorzusammensetzung auf dieser intermediären Schicht abgeschieden ist.

6. Verwendung eines Reinigungselements mit katalytischer Wirksamkeit zur katalytischen Reinigung von Abgasen von Verbrennungsmotoren
dadurch gekennzeichnet,
daß es nach einem der Ansprüche 1 bis 5 aufgebaut ist.

7. Verfahren zur Herstellung eines katalytischen Reinigungselements zur Filtration und katalytischen Reinigung heißer Gase,
dadurch gekennzeichnet,
daß es die folgenden Stufen umfaßt:
- Herstellen von Fasern aus Metallegierungen vom MCrAlX-Typ, worin M in an sich bekannter Weise eine Matrix, ausgewählt aus Eisen und/oder Nickel und/oder Kobalt ist und X ein Element ist, das die Adhäsion der Oxidschicht, welche sich bei Kontakt mit heißen Gasen auf den Fasern bildet, verstärkt, ausgewählt aus Zirkonium, Hafnium, Cer, Lanthan und Misch-metall,
- Zusammensetzen der Fasern in einer ungeordneten statistischen Verteilung und Verdichten davon, um eine Faserstruktur zu bilden, die einen vorbestimmten Porositätsgrad aufweist,
- und Überziehen der Fasern mit einer Schicht einer Katalysatorzusammensetzung.

8. Verfahren nach Anspruch 7,
dadurch gekennzeichnet,
daß die Fasern durch Verwendung eines an sich bekannten Überhärtungsverfahrens auf Rolle erhalten werden.

9. Verfahren nach Anspruch 7 oder 8,
dadurch gekennzeichnet,
daß die Fasern vor dem Verdichten gemahlen werden.

10. Verfahren nach einem der Ansprüche 7 bis 9,
dadurch gekennzeichnet,
daß die erhaltene Faserstruktur einer Sinterbehandlung unterzogen wird.

11. Verfahren nach einem der Ansprüche 7 bis 9,
dadurch gekennzeichnet,
daß die Faserstruktur in einen metallischen Behälter eingebracht wird, die Einheit danach einer Sinterbehandlung unterzogen wird, so daß die Fasern am Rand unter anderem mit der Innenwand des Behälters verbunden werden.

12. Verfahren nach einem der Ansprüche 7 bis 11,
dadurch gekennzeichnet,
daß man vor der Abscheidung der Katalysatorzusammensetzung eine Oberflächenbehandlung der Fasern bewirkt um deren Verhakungsvermögen zu steigern.

13. Verfahren nach Anspruch 12,
dadurch gekennzeichnet,
daß man vor der Abscheidung der Katalysatorzusammensetzung die Fasern mit einer intermediären Schicht eines Haltestoffs mit groß entwickelter Oberfläche (wash-coat) überzieht.
